Europäisches Patentamt

European Patent Office

Office européen des brevets

(11) Publication number: **0 075 414**
**B1**

## (12) EUROPEAN PATENT SPECIFICATION

(45) Date of publication of patent specification: **13.11.85**

(21) Application number: **82304734.5**

(22) Date of filing: **09.09.82**

(51) Int. Cl.⁴: **F 16 C 11/08**

(54) Ball and socket joints.

(30) Priority: **22.09.81 GB 8128598**

(43) Date of publication of application:
**30.03.83 Bulletin 83/13**

(45) Publication of the grant of the patent:
**13.11.85 Bulletin 85/46**

(84) Designated Contracting States:
**BE DE FR IT SE**

(56) References cited:
**FR-A-1 131 983**
**FR-A-1 230 872**
**FR-A-1 380 368**
**FR-A-1 431 222**
**FR-A-1 588 729**
**FR-A-2 456 875**
**GB-A-1 097 120**
**US-A-1 883 020**
**US-A-2 417 160**
**US-A-2 424 431**
**US-A-2 424 455**
**US-A-2 855 232**
**US-A-3 108 830**

(73) Proprietor: **AUTOMOTIVE PRODUCTS PUBLIC
LIMITED COMPANY
Tachbrook Road
Leamington Spa Warwickshire CV31 3ER (GB)**

(72) Inventor: **Lidstone, Paul Frederick
Shrieves House Sheriffs Lench
Evesham Worcestershire (GB)**
Inventor: **Ebbutt, Alan Norman
105 St. Leonards View
Dordon Tamworth Staffordshire (GB)**

(74) Representative: **Farrow, Robert Michael
Patent Department Automotive Products plc
Tachbrook Road
Leamington Spa Warwickshire CV31 3ER (GB)**

## Description

This invention relates to ball and socket joints for, but not exclusively for, use on motor vehicle steering and suspension systems.

A typical ball and socket joint has a ball pin, the head of which is mounted for rotation in a bearing cup located within a socket housing.

Such a joint is shown in GB—A—1 097 120, in which the head of the ball pin rotates in a pair of opposed bearing cups which are biased onto the spherical head by elastomeric load rings located one at each of the polar ends of the respective bearing cups. The load rings in this application serve two functions, firstly they each load their respective bearing cups against the head of the ball pin to apply a torque load to the head, and secondly they act as seals to prevent lubricant from escaping from the joint and also prevent an ingress of dirt.

Because of the position of the loading rings and their dual function they are not able to exert either a predictable or a sufficiently high torque load on the ball joint.

In US—A—2 855 232, there is disclosed a ball joint in which the ball like member is free to rotate within the bearing shells about the longitudinal axis of the stud but may not tilt or pivot with respect there to. Any tilting of the inner joint member produces deformation of the elastomeric bushing(s) resisting such movements and providing a self centering effect. To ensure that tiltable motion of the stud is accomplished through a deformation of the bushing the bearing shells are bonded to the elastomeric bushing and interlock with the bushing.

It is therefore, a main object of the invention to improve the tilting movement of the joint member allowing a greater degree of movement.

According to the invention, there is provided a ball and socket joint comprising a socket housing having a cavity therein in which the part spherical head of a ball pin is housed, the head being mounted in a bearing cup for rotation and pivotal movement with respect thereto, and in which the bearing cup is biased against the head by a compressed resilient annular bush acting between the bearing cup and the housing characterised in that the bearing cup has two outwardly projecting annular flanges each of which abuts a co-operating annular end face of the housing thereby to axially locate the bearing cup in the socket housing, that the bush surrounds the equatorial region of the head on both sides of the equator to exert a compressive load on the head via the bearing cup (14) and that the bush extends for substantially the length of the cavity between the two flanges.

The outer peripheral edge of each of the flanges is spaced from the internal surface of the housing to allow a limited radial movement of the bearing cup in the cavity.

The bearing cup may be a one-piece cup having circumferentially spaced slots therein extending alternately from one end of the cup and the other or alternatively may be divided into two parts around the equatorial region of the head, the two parts being interdigitated by respective portions that overlie the equator.

The invention will be described by way of example with reference to the accompanying drawings in which:—

Fig. 1 shows in longitudinal section on one side of a centre line CL, a steering ball joint and socket assembly having a ball pin with a single shank protruding from a socket housing, and on the other side of the centre line, a torque control arm assembly having a ball pin with two shanks extending in opposite directions;

Fig. 2 is an isometric drawing of a bearing cup as is used in Fig. 1.

Fig. 3 shows one part of an alternative construction of bearing cup; and

Fig. 4 shows a section through a resilient bush as is used in Fig. 1.

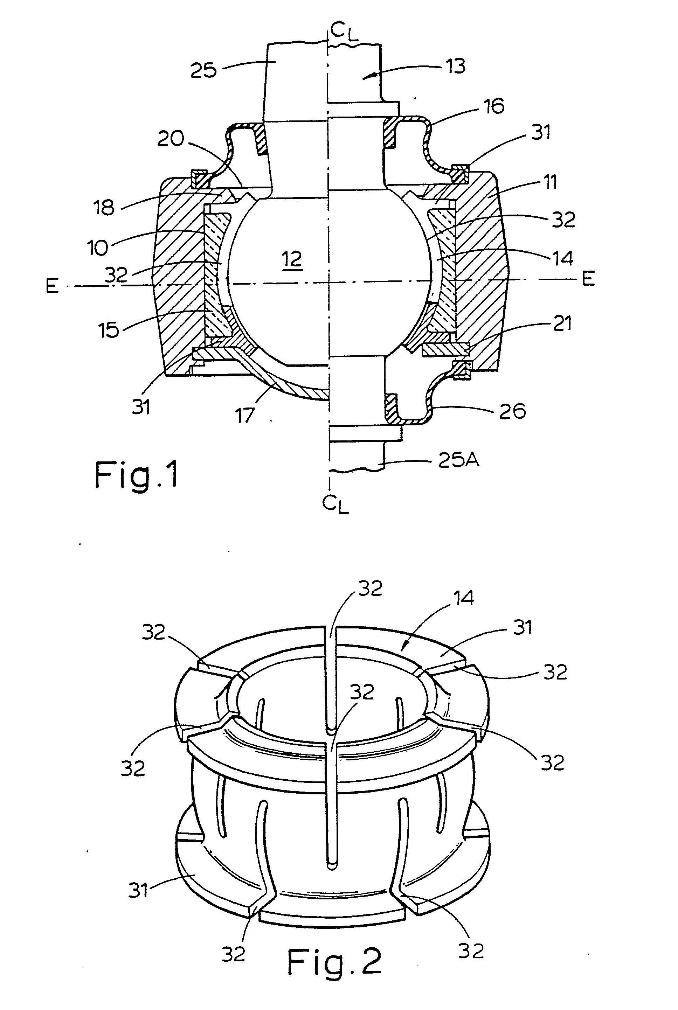

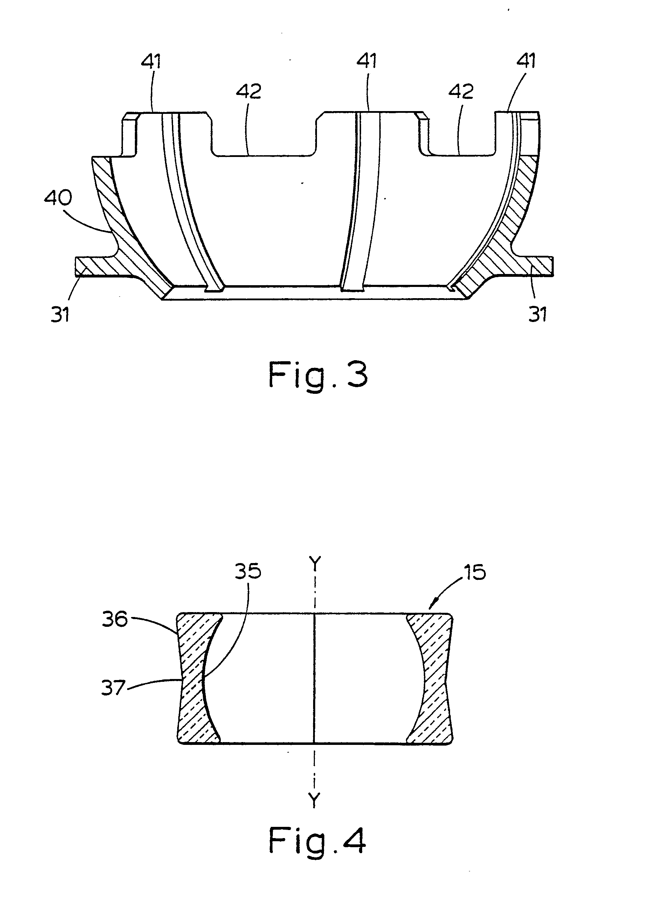

With reference to Figs. 1, 2 and 4 a ball and socket joint comprises a steel forged socket housing 11 having a cavity 10 therein in which the spherical head 12 of a ball pin 13 is housed. The head 12 is mounted for rotation in the socket in a bearing cup 14 which is moulded from acetal resin or nylon 6 or 66. The bearing cup 14 locates against a shoulder 18 formed in the mouth 20 of the cavity and is surrounded by a compressed resilient elastomeric bush 15. The bush 15 is shown in its unloaded state in Fig. 4. The mouth of the cavity is closed by an elastomeric boot 16.

On one side of the centre line $C_L$ is shown a ball pin having a single shank 25 extending from the mouth 20 of the cavity. The base of the cavity is closed by an end cover 17 which is swaged into position. This is a steering joint type assembly. On the other side of the centre line $C_L$ is shown a ball pin having two shanks 25 and 25A extending in opposite directions. In this case the cup 14 and bush 15 are held in position by a washer 21 also swaged into the base of the cavity, which is then sealed with a second boot 26. This is a typical torque control arm assembly.

The bearing cup 14 is a snap over bearing extending on both sides of the equator E—E of the head 12 of the ball pin and has an internal spherical surface for accommodating the head 12 and its external surface is also spherical and has two outwardly projecting annular flanges 31 located one at each end portion thereof. The flanges 31 each project along a line of latitude with respect to the ball and the upper flange rests against the shoulder 18 and the lower flange is adjacent the end cover 17 or washer 21. The outer peripheral edge of each of the flanges 31 is spaced away from the internal surface of the housing 11 so that in use the bearing cup is capable of limited movement towards the housing. Circumferentially spaced slots 32 extend alternately from one end of the cup and the other around the circumference of the cup, and extend to just beyond the equator of the ball. This is to make the walls of the cup 14 flexible to allow it to snap-over the head 12 of the pin.

The bearing cup is surrounded by the bush 15 that extends for substantially the length of the socket cavity 10 and is located between the flanges 31 to exert a load primarily on the equatorial region E—E of the head 12 of the pin.

The resilient bush 15 (Fig. 4) is formed from a polyurethane elastomer and has an internal spherical surface 35 that accommodates the external surface of the bearing cup 14. The external surface 36 of the bush is waisted, i.e. it is generally cylindrical in shape but the diameter tapers radially inwards from each end to a minimum diameter waist 37 which is in a position equivalent to the equator of the ball pin. The external dimension of the bush 15 are oversize relative to the cavity in the housing 11 so that when the bush is inserted therein the bush is compressed down to have an external cylindrical shape as shown in Fig. 1. The diameter of the waist 37 is almost the same as the internal diameter of the housing cavity. The bush 15 is split longitudinally into two symmetrical halves along the line Y—Y to enable it to be easily assembled between the two flanges 31 of the bearing cup 14, prior to the assembled bush, bearing cup and ball pin being inserted into the housing.

When the joint is assembled, the compressed bush 15 loads the bearing cup against the head 12 of the pin. This exerts a controlled predetermined torque load on the head of the pin to attenuate vibrations in the steering system and to give the driver the correct 'feel'.

As an alternative to the one piece bearing cup shown in Fig. 2, they can be formed from two identical parts 40, one of which is shown in Fig. 4, which are split equatorially relative to the ball. Each half of the bearing cup has projections 41 thereon that overlie the equator of the ball and interengage with like recesses 42 on the other half of the bearing cup so that when the two parts are assembled together the projections 41 are interdigitated and each projection overlies the equator of the ball.

The torque load exerted by the bush 15 on the head 12 of the ball pin can be varied by using different grades of polyurethane elastomer having different hardness characteristics.

## Claims

1. A ball and socket joint comprising a socket housing (11) having a cavity (10) therein in which the part spherical head (12) of a ball pin (13) is housed, the head (12) being mounted in a bearing cup (14) for rotation and pivotal movement with respect thereto and in which the bearing cup (14) is biased against the head (12) by a compressed resilient, annular bush (15) acting between the bearing cup (14) and the housing (11) characterised in that the bearing cup (14) has two outwardly projecting annular flanges (31) each of which abuts a co-operating annular end face of the housing (11) thereby to axially locate the bearing cup (14) in the socket housing (11), that the bush (15) surrounds the equatorial region of the head (12) on both sides of the equator (E—E) to exert a compressive load on the head (12) via the bearing cup (14) and that the bush (15) extends for substantially the length of the cavity (10) between the two flanges (31).

2. A ball and socket joint as claimed in claim 1 characterised in that the outer peripheral edge of each of the flanges (31) is spaced from the internal surface of the housing (11) to allow a limited radial movement of the bearing cup (14) in the cavity (10).

3. A ball and socket joint as claimed in any preceding claim, characterised in that the bearing cup (14) is a one piece cup having circumferentially spaced slots (32) therein extending alternately from one end of the cup and the other, and each slot extends to overlie the equator (E—E) of the head (12) of the pin.

4. A ball and socket joint as claimed in Claim 1 or in Claim 2 characterised in that the bearing cup (14) is divided into two parts (40) around the equatorial region of the head (12) and the two parts are interdigitated by respective portions (41) that overlie the equator (E—E).

5. A ball and socket joint as claimed in any preceding claim characterised in that the resilient bush (15) before insertion into the housing is of the form of a waisted cylinder and has an external surface (36) such that the external diameter of the bush (15) gradually tapers radially inwards from the ends thereof towards a minimum diameter waist (37) and has an internal spherical surface (35) which when assembled co-operates with the external surface of the bearing cup (14).

6. A ball and socket joint as claimed in claim 5 characterised in that the diameter of the waist (37) is substantially equal to the internal diameter of the cavity in the housing (11).

## Revendications

1. Joint à rotule comprenant un boîtier de rotule (11) qui présente intérieurement une cavité (10), dans laquelle la tête partiellement sphérique (12) d'une tige à rotule (13) est logée, la tête (12) étant montée dans un coussinet (14) pour décrire un mouvement de rotation et de pivotement par rapport à ce coussinet et dans laquelle le coussinet (14) est pressé contre la tête (12) par un manchon annulaire élastique comprimé (15) qui exerce son action entre le coussinet (14) et le boîtier de rotule (11), caractérisé en ce que le coussinet (14) possède deux collerettes annulaires (31) en saillie vers l'extérieur, dont chacune bute contre une face terminale annulaire du boîtier (11) qui coopère avec elle, pour fixer la position axiale du coussinet (14) dans le boîtier de rotule (11), en ce que le manchon (15) entoure la région équatoriale de la tête (12) de part et d'autre de l'équateur (E—E), pour exercer un effort de compression sur la tête (12) par l'intermédiare du coussinet (14) et en ce que le manchon (15) s'étend à peu près sur toute la longueur de la cavité (10) entre les deux collerettes (31).

2. Joint à rotule selon la revendication 1, caractérisé en ce que le bord périphérique extérieur de chacune des collerettes (31) est espacé de la surface interne du boîtier (11) pour permettre un mouvement radial limité du coussinet (14) à l'intérieur de la cavité (10).

3. Joint à rotule selon l'une quelconque des revendications précédentes, caractérisé en ce que le coussinet (14) est un coussinet d'une seule pièce présentant des fentes (32) espacées circonférentiellement, qui s'étendent alternativement d'une extrémité du cousinet et de l'autre, en ce que chaque fente se prolonge de manière à déborder au-delà de l'équateur (E—E) de la tête (12) de la tige à rotule.

4. Joint à rotule selon la revendication 1 ou la revendication 2, caractérisé en ce que le coussinet (14) est divisé en deux parties (40) le long de la région équatoriale de la tête (12) et en ce que les deux parties sont imbriquées l'une dans l'autre par des parties respectives (41) qui débordent au-delà de l'équateur (E—E).

5. Joint à rotule selon l'une quelconque des revendications précédentes, caractérisé en ce que le manchon élastique (15) présente avant son insertion dans le boîtier, la forme d'un cylindre étranglé et présente une surface externe (36) telle que le diamètre extérieur du manchon (15) décroisse progressivement radialement vers l'intérieur à partir des extrémités de ce manchon vers un étranglement de diamètre minimum (37), et possède une surface sphérique interne (35) qui, lorsque les éléments sont assemblés, coopère avec la surface externe du coussinet (14).

6. Joint à rotule selon la revendication 5, caractérisé en ce que le diamètre de l'étranglement (37) est à peu près égal au diamètre intérieur de la cavité formée dans le boîtier (11).

**Patentansprüche**

1. Kugelgelenk mit einem Pfannengehäuse (11), das einen Hohlraum (10) darin hat, in welchem der Teilkugelkopf (12) eines Kugelbolzens (13) untergebracht ist, wobei der Kopf (12) in einer Lagerschale (14) für eine Drehung und eine Schwenkbewegung gegenüber dieser angeordnet ist, und in welchem die Lagerschale (14) gegen den Kopf (12) durch eine zusammengedrückte elastische, ringförmige Buchse (15) vorgespannt ist, die zwischen der Lagerschale (14) und dem Gehäuse (11) wirkt, dadurch gekennzeichnet, daß die Lagerschale (14) zwei nach außen vorstehende ringförmige Flansche (31) hat, von denen jeder an einer mit ihm zusammenwirkenden ringförmigen Endfläche des Gehäuses (11) angreift, um dadurch die Lagerschale (14) in dem Pfannengehäuse (11) axial zu positionieren, daß die Buchse (15) den Äquatorbereich des Kopfes (12) auf beiden Seiten des Äquators (E—E) umgibt, um eine Druckkraft auf den Kopf (12) über die Lagerschale (14) auszuüben, und daß sich die Buchse (15) im wesentlichen über die Länge des Hohlraumes (10) zwischen den beiden Flanschen (31) erstreckt.

2. Kugelgelenk nach Anspruch 1, dadurch gekennzeichnet, daß die äußere Randkante von jedem der Flansche (31) von der inneren Oberfläche des Gehäuses (11) beabstandet ist, um der Lagerschale (14) eine beschränkte Radialbewegung in dem Hohlraum (10) zu gestatten.

3. Kugelgelenk nach einem vorhergehenden Anspruch, dadurch gekennzeichnet, daß die Lagerschale (14) eine einteilige Schale ist, die in Umfangsrichtung beabstandete Schlitze (32) darin hat, die sich wechselweise von einem Ende der Schale und dem anderen aus erstrecken, und sich jeder Schlitz so weit erstreckt, daß er den Äquator (E—E) des Kopfes (12) des Bolzens überlagert.

4. Kugelgelenk nach Anspruch 1 oder Anspruch 2, dadurch gekennzeichnet, daß die Lagerschale (14) in zwei Teile (40) um den Äquatorbereich des Kopfes (12) herum unterteilt ist, und die beiden Teile durch jeweilige Abschnitte (41), die den Äquator (E—E) überlagern, miteinander verzahnt sind.

5. Kugelgelenk nach einem vorhergehenden Anspruch, dadurch gekennzeichnet, daß die elastische Buchse (15) vor ihrer Einführung in das Gehäuse die Form eines eingeschnürten Zylinders hat und eine äußere Oberfläche hat, derart, daß sich der äußere Durchmesser der Buchse (15) allmählich radial nach innen von ihren Enden bis zu einer Taille (37) mit einem minimalen Durchmesser verjüngt, und eine innere kugelförmige Oberfläche (35) hat, die im eingebauten Zustand mit der äußeren Oberfläche der Lagerschale (14) zusammenwirkt.

6. Kugelgelenk nach Anspruch 5, dadurch gekennzeichnet, daß der Durchmesser der Taille (37) im wesentlichen gleich dem Innendurchmesser des Hohlraumes in dem Gehäuse (11) ist.

Fig.1

Fig.2

Fig. 3

Fig. 4